# EUROPEAN PATENT SPECIFICATION

(11) **EP 2 697 042 B1**
(45) Date of publication and mention of the grant of the patent: **16.08.2017**
(21) Application number: 12719565.9
(22) Date of filing: 16.04.2012
(51) Int. Cl.: B29C 70/52, B29K 75/00

(54) **AUTOMATIC ADJUSTMENT OF RESIN LEVEL FOR PULTRUSION APPARATUS**
AUTOMATISCHE EINSTELLUNG DES HARZPEGELS FÜR EINE STRANGZIEHVORRICHTUNG
RÉGLAGE AUTOMATIQUE DU NIVEAU DE RÉSINE POUR APPAREIL DE PULTRUSION

(30) Priority: 15.04.2011 DK 201100304
(43) Date of publication of application: 19.02.2014
(73) Proprietor: VKR Holding A/S, 2970 Hørsholm (DK)
(72) Inventor: NØRGAARD, Henry, DK-6950 Ringkøbing (DK)
(74) Representative: Patentgruppen A/S
(86) International application number: PCT/DK2012/000047
(87) International publication number: WO 2012/139582

(56) References cited:
- WO-A1-2010/041027
- CA-A1- 2 540 747
- GB-A- 2 202 182
- US-A- 3 993 726
- US-A- 5 747 075
- US-A1- 2005 037 195

## Description

### FIELD OF THE INVENTION

The invention relates to a pultrusion apparatus and, more particularly, to a pultrusion apparatus with automatic adjustment of resin level.

### BACKGROUND OF THE INVENTION

The composite moulding industry constantly improves its processes to develop products that are light weight, durable and have improved physical characteristics. Further, a number of companies constantly invest in research and development to facilitate both economical and efficient manufacturing of such products.
Among the various composite moulding techniques, pultrusion is one of the most common techniques for manufacturing composites. It is well known in the art that the pultrusion process facilitates continuous production of composites, thereby helping the manufacturers attain high efficiency and productivity. In a typical pultrusion process, fibre bundles are collimated through guidance through pre-form plates with a through-hole for each fibre bundle and afterwards drawn through a resin reservoir. The resin-impregnated fibre materials are then introduced into a pultrusion die and are subsequently cured due to a high temperature of the pultrusion die. Finally, the cured fibres are pulled from the other side of the pultrusion die to produce the continuously pultruded products.

When the resin reservoir is an injection box, the injection box must at all times comprise sufficient amount of resin to wet the fibre bundles sufficiently. In order to ensure this, prior art uses pumps set to constantly pump in an excess amount of resin to the injection box, whereby the fibres are all sufficiently wetted with resin.

A problem related to this method is that a large amount of resin is wasted since the excess amount escapes the injection box through holes in the injection box and gatherings between the injection box and the injection die.

A natural solution would be to slow down the pump; however, even a little risk of lacking resin for a period is unacceptable, since this would destroy the production during such lack of resin.

Another natural solution would be to simply mix a large amount of resin on top of the injection box and let it enter by gravity as necessary. However, the typically used resin is a two-component resin, where the resin will start to cure in typically less than 20 minutes. Therefore, such solution is not feasible either.

GB 2202182 A and US 5747075 disclose an apparatus according to the preamble of claim 1. It is an object of the present invention to provide an improved pultrusion apparatus with which the above disadvantages may be overcome.

### SUMMARY OF THE INVENTION

The present invention relates to a pultrusion apparatus for manufacturing a pultruded product, according to claim 1. According to the present invention, it has been discovered that an automatic measurement with corresponding adjustment of the at least one pump is ideal for use with a pultrusion apparatus according to the present invention.

According to embodiments of the present invention it has been discovered that most likely the problems described in prior art are linked up to the use of thermoplastic resins in the pultrusion process. Consequently, by using a thermoset plastic instead one of many advantages is that automatic control of resin level may actually be performed where some prior art has considered it to be highly problematic or even impossible.

The fibre material is wetted with resin in the resin box. It is important for the final quality of the pultruded product that sufficient resin is residing in the resin box at any time to ensure adequate wetting of the fibre material. This may according to preferred embodiments of the invention be achieved without any significant loss or waste of resin by measuring a parameter related to the amount of resin in the resin box and adjust the at least one pump accordingly.

In an embodiment of the invention, said controller is configured to collect data at least once every 60 seconds, preferably at least once every 10 seconds, more preferably at least once every 5 seconds, and wherein said supply of resin is adjusted at least once every 120 seconds, preferably at least once every 30 seconds, more preferably at least once every 10 seconds.

In an embodiment of the invention, said at least one pump is configured to be controlled to ensure that the amount of resin within said injection box is kept constant within a 5% variation by weight, such as within a 3% or 2% variation by weight.

With a suitable controller and at least one pump, it is possible to automatically adjust the at least one pump to provide a substantially constant resin level in the injection box. Thereby the amount of resin within said injection box, during operation, may be kept constant within a buffer amount defined by an amount of excess resin.
In an embodiment of the invention, said resin is a thermoset plastic, preferably polyurethane (PUR).
Polyurethane used in a pultrusion apparatus as described herein has been shown to provide excellent pultruded products. Since the chemicals used for a suitable polyurethane resin may contribute considerably to the production costs it may be important for process economy to avoid any spills of resin. The same is true when considering the working environment around the pultrusion apparatus, because personnel should not be in uncontrolled contact with for example isocyanates. Therefor it becomes particularly important to control the level of liquid resin in the resin box when polyurethane resins are used and in that way substantially avoid any spills of resin from the resin box.
Automatic control of the amount of resin in the resin box allows for using low viscosity polyurethane resins which would otherwise be difficult to handle without substantial spills occurring.
In an embodiment, which does not form part of the present invention, said injection box is free of upper openings to the surroundings.

Without upper openings, the only access to the injection box is the resin supply opening, the opening through which the fibres enter and the opening through which the wetted fibres exit. Hereby the risk of polluting elements from the outside is lessened and pressure measurements within the box are facilitated. Also, the escape of volatile resin components into the working environment may be reduced.

In an embodiment of the invention, said measuring apparatus is configured to monitor pressure variations within said injection box.

Measurements on pressure variations has shown to be an advantageous method of adjusting the resin level. A certain pressure range may indicate that sufficient resin is present. If the pressure drops below such range, further resin is added to increase the amount of resin and thereby increase the pressure within the injection box.

In an embodiment of the invention, said measuring apparatus is configured to use sound waves, preferably ultrasonic sound waves with a frequency above 20 kHz, for collecting data related to the amount of resin within said injection box. According to the invention, said injection box further comprises at least one upper opening for facilitating an excess amount of resin to escape the interior of said injection box.
In an embodiment of the invention, the surface area of said upper opening is less than 30%, preferably less than 15%, most preferably less than 5% of the surface area of the upper side of said injection box.

In an embodiment of the invention, more than 90 % of the fibres of said pultruded product extend along the production direction, such as all of the fibres of said pultruded product.
According to an embodiment of the invention, the pultrusion apparatus may typically be operated at a substantially constant speed.
In a preferred embodiment, said upper opening is relatively small compared to the surface area of the upper side of the injection box. It may e.g. substantially be a rectangle of less than 10 cm x 10 cm, such as less than 4 cm x 6 cm. The reason for this small opening is that is makes it easier to control fluctuations in the resin amount. Also, the resin-containing system remains as closed as possible with respect to odor from the resin.
In further embodiments, the upper opening may have any form, such as substantially circular, with an area of less than 20cm².

In an embodiment of the present invention, the upper opening is used for collecting data related to the amount of resin within said injection box.
In further embodiments, the upper opening is simply used for allowing a laser beam access to the injection box, and the upper may therefore be labeled a laser opening. In this case, there may be a volume just beneath the laser opening in order to enable the resin surface to perform a "buffer"-motion, which may be measured with the aid of the laser. For such a laser opening, the area of the opening may be as little as less than 5cm², such as less than 2cm² or less than 1cm².
In an advantageous embodiment, such a laser opening may be made in a removable lid made to cover said upper opening. Hereby an upper opening with a larger area may be covered by the lid, whereby the "buffer"-motion can be carried out below the lid with the laser light passing through said lid. Hereby is further facilitated that the lid can be removed e.g. for cleaning the system. As such the advantages related to a relatively large upper opening (e.g. 20 cm²) for buffer may be combined with the advantages related to a relatively small laser opening (e.g. 2cm²)

According to an embodiment of the invention, said at least one upper opening is positioned between the inlet end of said injection box and the introduction of resin. This will be advantageous since the resin will naturally flow in the production direction along with the fibre bundles. Excess resin is typically flowing backwards in the resin box and may be easier to monitor behind the introduction of resin, but still of course within the injection box.

As a consequence of the material thickness of the injection box, a collar is created when the upper opening is made in the injection box. However, according to an embodiment of the invention, an additional collar may be mounted around and above the upper opening in order to limit the risk of resin escaping the upper opening in the case of a resin ripple in the upper opening.

In an embodiment of the invention, said controller comprises a measuring apparatus for monitoring said excess amount of resin in said at least one upper opening, preferably said measuring apparatus comprises a laser.

According to an embodiment of the invention, the upper opening may be a carving constituting less than 30%, preferably less than 15%, most preferably less than 5% of the surface area of the upper side of said injection box.
According to an embodiment of the invention, said carving in the upper side of the injection box facilitates an amount of resin to be visible from the outside, whereby the resin level may be monitored through said carving.
According to an embodiment of the invention, said carving is covered with a transparent material.

In an embodiment of the invention, at least a part of said injection box is manufactured from a transparent material, wherein the transmittance of said transparent material is at least 3% through a 10 mm sample of said transparent material when applying a 546 nm light beam, such as at least 20% or at least 40%.

According to an embodiment of the invention, at least a part of the injection box is made in a transparent material, in order to be able to visually monitoring the resin in the injection box without necessarily having an opening in the injection box

In an embodiment of the invention, the transmittance of the transparent material is at least 40% preferably at least 60% measured according to ASTM (D1746-35).

An advantage related to the use of a transparent material for the injection box may be that the injection box may then not require an opening, i.e. the injection box may be substantially airtight.
In another embodiment, which may be an alternative to a transparent injection box, a limited area of the injection box may be manufactured with less material thickness, whereby it may be possible to visually inspect the interior of the injection box through this area.
In a further embodiment, said measuring apparatus, e.g. a laser, may be mounted inside of a glass dome being part of the injection box. In this way, an upper opening may be avoided such that potential harmful fumes may be kept inside the injection box. The pressure inside such glass dome may be adjusted as desired, e.g. with a pressure raised slightly above atmospheric pressure.
In yet a further embodiment, said measuring apparatus may be conductive elements positioned e.g. one in the bottom of the injection and another in the top of the injection box. With a use of a conductive resin, a signal may be recorded, when the resin level is sufficiently high to touch the upper conductive element, thereby facilitating a current running through the resin. Thereby, this on/off mechanism may be used to control resin supply to the injection box.

In an embodiment of the invention, said injection box, as viewed along said production direction, has a width between 10 and 40 cm, preferably between 15 and 30cm.

According to preferred embodiments of the invention, the injection box is designed such that the inner fibre-passing volume of the injection box has a width between 10 and 25 cm, and a height between 1 and 20 cm.

In an embodiment of the invention, said injection box, as viewed along said production direction, has a height between 5 and 25 cm, preferably between 7 and 15 cm.

In an embodiment of the invention, said injection box has a thickness in said production direction between 10 and 80 cm, preferably between 20 and 50 cm.

According to an embodiment of the invention, said injection box comprises an inlet end adapted for receiving said fibres and an outlet end adapted for delivering said fibre bundles to said pultrusion die,

In an embodiment of the invention, said controller and said at least one pump are directly connected with respect to communication.

According to an embodiment of the invention it may be advantageous to have a direct electrical connection between the pump, the controller and the measuring apparatus in order to facilitate a shorter response time.
According to an embodiment of the present invention said injection box is manufactured from a polymer, preferably said polymer is selected from the group consisting of polyethylene, polyoxymethylene, polypropylene, polytetrafluoroethylene, polyamide, polymethylmethacrylate and polycarbonate.

In an embodiment of the invention, more than 90 % of the fibres of said pultruded product extend along the production direction, such as all of the fibres of said pultruded product.

PUR is believed to provide more strength than e.g. polyester resin. Therefore, a pultruded product of a larger amount of uni-directional fibres in combination with PUR may possess satisfactorily strength.

According to an embodiment of the invention, the amount of fibres in the pultruded product is between 50 and 90 % by weight of the pultruded product, preferably between 60 and 85. The remaining part is then resin. For PUR as the resin, it is typically between 70 and 85, and for polyester as the resin, it is typically between 60 and 75.

In an embodiment of the invention, said injection box further comprises at least one upper opening for facilitating an excess amount of resin to escape the interior of said injection box,
wherein the surface area of said upper opening is less than 30%, preferably less than 15%, most preferably less than 5% of the surface area of the upper side of said injection box,
wherein said controller comprises a measuring apparatus for monitoring said excess amount of resin in said at least one upper opening, wherein said measuring apparatus is a laser,
wherein said at least one pump on the basis of data from said controller is configured to be controlled to ensure that the amount of resin within said injection box is kept constant within a 5% variation by weight, such as within a 3% or 2% variation by weight.
Moreover, the invention relates to a method of adjusting the supply of resin to an injection box of a pultrusion apparatus, according to claim 10. In an embodiment of the invention, said step of collecting data comprises the step of using a laser light to collect data at least once every 60 seconds, preferably at least once every 10 seconds, more preferably at least once every 5 seconds.
In an embodiment of the invention, said laser light is used to measure an excess amount of resin escaping from the interior of said injection box.
In an embodiment of the invention, said laser light is used to measure an excess amount of resin escaped from the interior of said injection box through at least one upper opening of said injection box.

In an embodiment of the invention, said step of adjusting the supply of resin is carried out at least once every 60 seconds, preferably at least once every 10 seconds, more preferably at least once every 5 seconds, such that the amount of resin within said injection box is kept constant within a 5% variation by weight, such as within a 3% or 2% variation by weight.
Moreover, the invention relates to the use of automatic adjustment of resin level in a pultrusion apparatus to facilitate a desirable resin level throughout a pultrusion process, according to claim 15.

### BRIEF DESCRIPTION OF THE DRAWINGS

In the following section, the invention will be described in a greater detail with reference to embodiments shown by the enclosed figures. It should be emphasised that the embodiments shown are used for example purposes only and should not be used to limit the scope of the invention.
The invention and embodiments thereof will now be further elucidated by means of figures.
Fig. 1 is a schematic representation of a pultrusion apparatus according to an embodiment of the present invention,
Fig. 2A is a top view of an injection box according to an embodiment of the present invention,
Fig. 2B is a side view of the injection box in fig. 2A,
Fig. 3A is a front view of a guide plate according to an embodiment of the present invention,
Fig. 3B is a front view of a guide plate according to a more complex embodiment of the present invention,
Fig. 4 is a perspective view of a replaceable inlet section according to an embodiment of the present invention, and
Fig. 5 is a schematic representation of two mandrels according to an embodiment of the present invention.

A person skilled in the art will readily appreciate that various features disclosed in the description may be modified, and that various embodiments disclosed and/or claimed may be combined without departing from the scope of the invention.

### DETAILED DESCRIPTION

Profiles obtained with pultrusion are currently used in a wide variety of application areas such as engineering, aerospace, construction and pre-fabricated building and infrastructural accessories such as doors, windows and sky-light frames. The type of fibre material that is used in the pultrusion process, generally, depends on the area of application.

According to embodiments of the invention, the fibre materials according to this invention are made from a material selected from the group consisting of aramide, carbon, glass, basalt or natural fibres.
According to embodiments of the invention, the resin-impregnated group of fibre materials is heated prior to being positioned into the forming mould.
The resin typically used in the pultrusion process may be selected from the group consisting of polyurethanes, polyesters and epoxies. In principle other resins may be used as well.

According to further embodiments of the invention, the process of heating the pultrusion die may be carried out in any conventional manner known in the art. In order to facilitate a high heat transfer in said pultrusion die, it is, generally, made of steel.

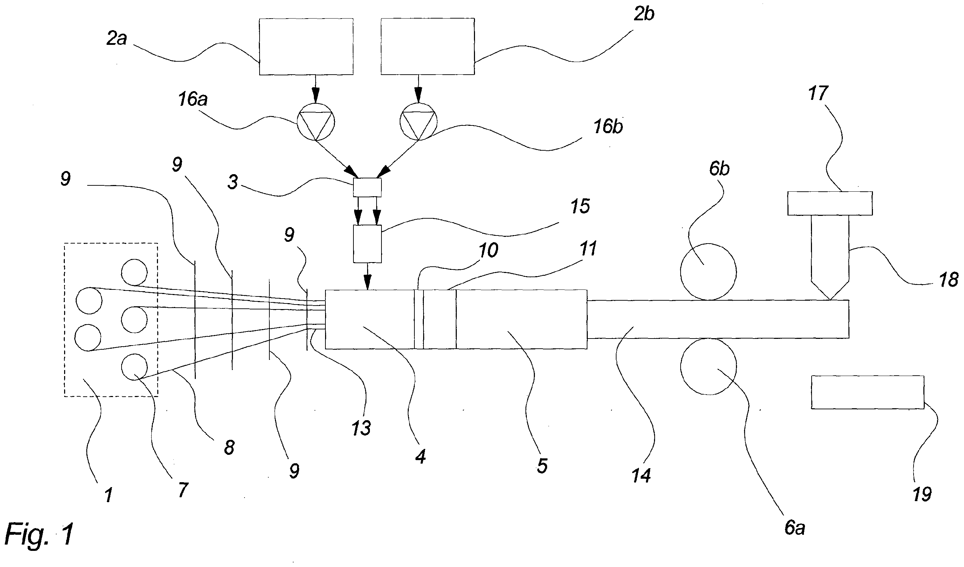

Figure 1 schematically represents a pultrusion apparatus in accordance with an embodiment of the invention for manufacturing a profile. Here the fibre supply 1 is a magazine having a large number of fibre spools 7 (only 5 spools shown in the figure). From each of the fibre spools 7, a fibre material 8 runs off and extends through a number of pre-form plates 9.

Typically the fibre material is provided in a pre-defined form. Further, the pre-defined form in which the fibre material is provided typically depends on special properties/characteristics associated with the desired profile corresponding to an application area. Various examples of the pre-defined form include, but are not limited to, single fibres, tows, rovings and mats.

One or more pre-form plates 9 may be used to guide individual fibre bundles 8 between the fibre spools 7 and the injection box 4. These pre-form plates 9 typically comprise a number of holes corresponding to approximately the number of fibre spools 7 in use or less. With further pre-form plates 9, the holes in these are brought closer together as the fibres are approaching the injection box 4.
In an embodiment of the invention, one pre-form plate 9 may be mounted directly onto the injection box 4. This pre-form plate 9 may comprise at least one hole for guiding a number of fibre bundles or a number of holes for controlling individual fibre bundles.

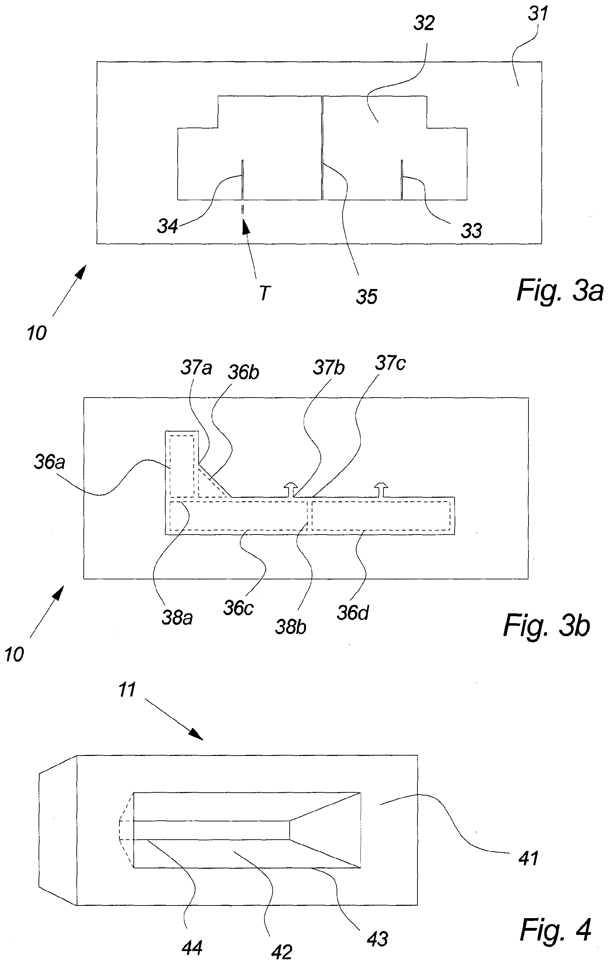

Hereby the fibres 13 are brought into close proximity to each other and continue into the injection box 4 where they are being impregnated by the resin being supplied from a resin mixing chamber 15. Thereafter the impregnated fibres enter the guide plate 10, further enter the replaceable inlet section 11 before entering the heated pultrusion die 5 for curing the resin.
The guide plate 10 will be further explained below with reference to fig. 3, and the replaceable inlet section 11 will be further explained below with reference to fig. 4.
After the curing process, a conventional pulling mechanism e.g. in the form of a roller 6a and a roller 6b is used to grip and pull a cured profile 14 out of the pultrusion die 5. The cured profile 14 is therefore a continuous pultruded profile with a selected shape, defined by the interior shape of the pultrusion die.
Thereafter, the cured profile 14 is advanced to a cutting station 17. At the cutting station 17, the continuously pultruded cured profile 14 is cut with a saw 18 at a predetermined length to obtain the final profile 19.

As mentioned above, the resin is supplied to the injection box 4 through a mixing chamber 15. In the shown preferred embodiment the resin is a polyurethane comprising at least two reactive resin components, e.g. polyols and isocyanates, being stored in separate containers 2a, 2b from which they are pumped by means of separate pumps 16a, 16b through optional separate heaters 3, and thereafter the two resin components are mixed in the mixing chamber 15 and introduced into the injection box 4.

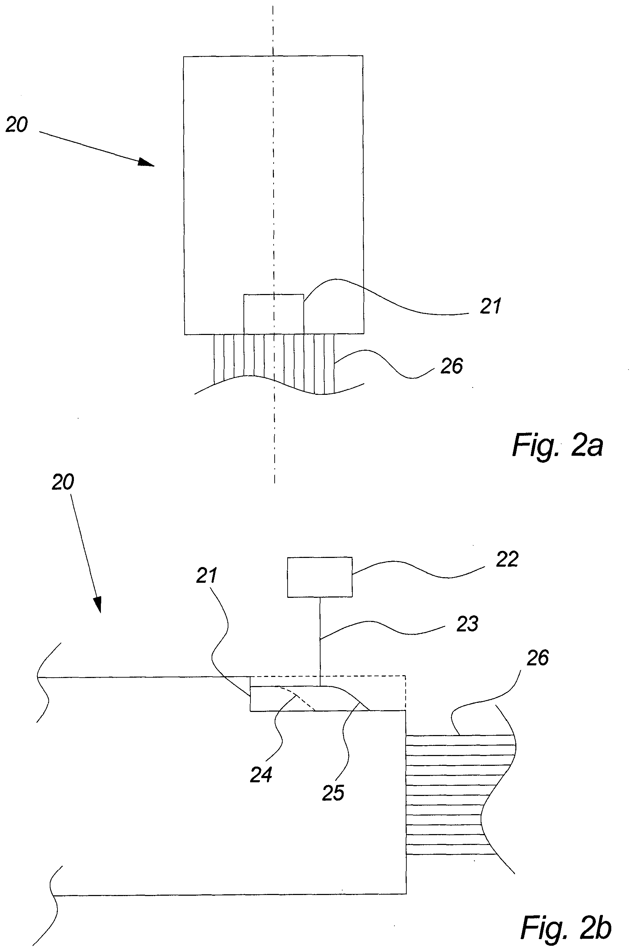

Fig. 2A is a top view of an injection box 20 according to the present invention, where Fig. 2B is a side view of the same.
In this embodiment of the present invention, a carving 21 is shown in the top of the injection box at the inlet end for the fibre material 26. The resin in the resin box is visible from the outside of the injection box through the carving. Depending on the amount of resin in the injection box, the build up of resin in the carving will vary. The resin residing in the carving at any time may be described as a buffer amount of excess resin as compared to the amount of resin necessary to adequately fill the injection box and thereby wet the fibres.

A light source 22 is arranged to point a beam of light 23 towards the buffer amount of resin in the carving, collecting data for a controller (not shown). When the buffer amount is larger, the resin level in the carving will reach position 25. By means of said beam of light 23, the controller regulates the pumps, 16a and 16b on fig.1, for resin supply to supply less resin to the injection box 20 to prevent any spills and overflow. Accordingly, the buffer amount will diminish and when reaching position 24, by means of said beam of light 23, the controller will measure that the buffer amount is low and the controller will then regulate the pumps for resin supply to supply more resin to the injection box to prevent shortage of resin with respect to adequate wetting of the fibre material 26.
Fig. 3A is a front view along the production direction of a guide plate 10 according to an embodiment of the present invention. The guide plate 10 comprises a surrounding section 31 and an inner fibre-passing section 32 that has a shape approximating the shape of the pultruded product. In the shown embodiment, three fibre guides 33, 34, 35 are used of which the two 33, 34 extend partly through the fibre-passing section 32, whereas the last one 35 extends fully across the fibre-passing section 32. Obviously the number of both partly and fully extending fibre guides may be adjusted according to a specific purpose.
The thickness of fibre guide 34 is indicated with a T.
The fibre guides are arranged in such a way as to help preventing the individual fibres or fibre bundles to depart from a substantially alignment with respect to the production direction. Thereby good wetting of the fibre material is promoted and the build up of lumps of fibre material or fibre material protruding from the surface of the pultruded product is diminished, ensuring long continuous production runs.

Fig. 3B is a front view of a guide plate according to a more complex embodiment of the present invention. Even though not part of the guide plate, mandrels 36a, 36b, 36c, 36d are shown with dashed lines to indicate possible positions through the guide plate when the pultrusion apparatus is running. With a number of mandrels, as illustrated, cavities may be established within the pultruded product. With a more complex pultruded product as illustrated in fig. 3B, some areas of the guide plate may preferably comprise a fibre guide. Examples of such areas are illustrated with 37a, 37b, 37c. Furthermore, some of the mandrels may preferably be connected with a connecting element, e.g. around the areas illustrated with 38a, 38b.

Fig. 4 is a perspective view of a replaceable inlet section 11 according to an embodiment of the invention. The replaceable inlet section 11 comprises a surrounding section 41 and an inner fibre-passing section 42. The replaceable inlet section 11 is intended for using with the fibres passing in through an inlet side having an inlet cross-section 43 and out through an outlet side having an outlet cross-section 44. The outlet cross-section will correspond at least substantially to the desired geometric shape of the profile.

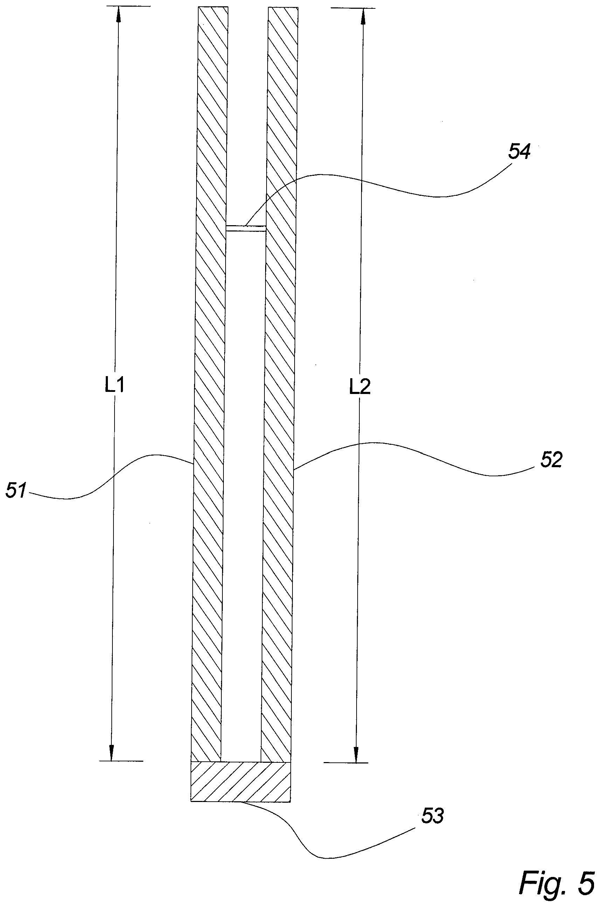

Fig. 5 is a schematic representation of two mandrels 51, 52 with lengths L1 and L2 according to an embodiment of the present invention. In order to minimize movement of these mandrels relative to each other, a transversal connecting element 54 has been introduced. When used with the present invention, the mandrels 51, 52 are fixed to a support bracket 53 at a point outside the inlet end of the pultrusion die. Preferably such point will be outside the inlet end of the injection box with the mandrels cantilevered forward through the full length of the pultrusion die.

According to an embodiment of the invention said measuring apparatus uses sound waves for collecting data related to the amount of resin within said injection box. In some embodiments of the invention the sound waves used are ultrasonic sound waves. Ultrasonic sound waves to be used will typically be sound waves with a frequency above 20 kHz.

In some embodiments of the invention the measuring apparatus may comprise a vision system. Hence collecting data related to the amount of resin within said injection box may be performed by the vision system e.g. three dimensional.

According to an embodiment of the invention said measuring apparatus uses electromagnetic waves for collecting data related to the amount of resin within said injection box. According to an embodiment of the invention the electromagnetic waves is light such as infrared light with wavelengths below 1 mm.

According to various embodiments of the invention, the measuring apparatus may be a reflecting type, a non-reflecting type, or a capacitive type.

According to various embodiments of the invention, the control system may be analogue or digital.

According to an embodiment of the invention the control system may be implemented as an integrated circuit, which e.g. may be a combination of more than one integrated circuit or combined with an electrical circuit.

According to an embodiment of the invention the integrated circuit may e.g. be a digital signal processor or a microcontroller.

According to various embodiments of the invention, the control system may have a lay-out comprising a closed-loop and/or an open-loop. The closed-loop layout may comprise a feedforward loop and/or a feedback loop.

According to an embodiment of the invention said control system is designed as a single-input single-output system. According to an embodiment of the invention said control system is designed as a multi-input multi-output system.

According to an embodiment of the invention the measuring apparatus comprises only one input to the control system. According to an embodiment of the invention the measuring apparatus comprises more than one input to the control system.

According to an embodiment of the invention the control system comprises only one output by which the at least one pump may be controlled. According to an embodiment of the invention the control system comprises more than one output by which the at least one pump may be controlled. According to an embodiment of the invention any combination of input and output is used to control the at least one pump.

According to various embodiments of the invention the control strategy of said control system may be adaptive control, robust control, optimal control, intelligent control or combinations hereof.

According to an embodiment of the invention the control system is based on any combination of neural networks, Bayesian probability, fuzzy logic, machine learning, evolutionary computation, genetic algorithms, PID or the individual Proportional, Integral or Differential regulation theories.

The method described above has a number of advantages as described above in the summary section. It should be noted that the disclosed embodiments are non-limiting examples, and as such the scope of the present invention is only limited by the subsequently following claims.

## Claims

1. A pultrusion apparatus for manufacturing a pultruded product, said pultrusion apparatus comprising a fibre supply (1) for supplying fibre bundles (8) comprising a plurality of fibres, a resin supply (2a, 2b), an injection box (4, 20), a pultrusion die (5), a pulling mechanism (6a, 6b) being arranged for pulling the fibre bundles (8) from the fibre supply (1) and through the injection box (4, 20) and the pultrusion die (5), and where the fibre bundles (8), during operation of said pultrusion apparatus, are being impregnated by the resin in the injection box (4, 20) and thereafter are being pulled through the pultrusion die (5) for curing the resin,
wherein the movement of the fibre bundles (8) through said pultrusion apparatus during operation of said pultrusion apparatus defines a production direction,
said pultrusion apparatus comprises a controller configured to collect data related to the amount of resin within said injection box,
said pultrusion apparatus comprises at least one pump capable of adjusting the amount of resin supplied to said injection box,
wherein said pump is configured to be controlled on the basis of said data from said controller, thereby adjusting the supply of resin to said injection box accordingly, **characterized in that** said injection box further comprises at least one upper opening for facilitating an excess amount of resin to escape the interior of said injection box, and through which the resin in the injection box is visible from the outside of said injection box.

2. A pultrusion apparatus according to claim 1, wherein said measuring apparatus is configured to monitor pressure variations within said injection box.

3. A pultrusion apparatus according to any of the claims 1-2, wherein said measuring apparatus is configured to use sound waves, preferably ultrasonic sound waves with a frequency above 20 kHz, for collecting data related to the amount of resin within said injection box.

4. A pultrusion apparatus according to any of the claims 1-3, wherein the surface area of said upper opening is less than 30%, preferably less than 15%, most preferably less than 5% of the surface area of the upper side of said injection box.

5. A pultrusion apparatus according to any of the claims 1 - 4, wherein said controller comprises a measuring apparatus for monitoring said excess amount of resin in said at least one upper opening, preferably said measuring apparatus comprises a laser.

6. A pultrusion apparatus according to any of the claims 1-5, wherein at least a part of said injection box is manufactured from a transparent material, wherein the transmittance of said transparent material is at least 3% through a 10 mm sample of said transparent material when applying a 546 nm light beam, such as at least 20% or at least 40%.

7. A pultrusion apparatus according to claim 6, wherein the transmittance of the transparent material is at least 40% preferably at least 60% measured according to ASTM D1746-35.

8. A pultrusion apparatus according to any of the claims 1-7, wherein said controller and said at least one pump are directly connected with respect to communication.

9. A pultrusion apparatus according to any of the claims 1-8, wherein said injection box further comprises at least one upper opening for facilitating an excess amount of resin to escape the interior of said injection box,
wherein the surface area of said upper opening is less than 30%, preferably less than 15%, most preferably less than 5% of the surface area of the upper side of said injection box,
wherein said controller comprises a measuring apparatus for monitoring said excess amount of resin in said at least one upper opening, wherein said measuring apparatus is a laser,
wherein said at least one pump on the basis of data from said controller is configured to be controlled to ensure that the amount of resin within said injection box is kept constant within a 5% variation by weight, such as within a 3% or 2% variation by weight.

10. Method of adjusting the supply of resin to an injection box of a pultrusion apparatus according to any of the claims 1-9, wherein said method comprising the following steps:
- collecting data related to the amount of resin within said injection box,
- adjusting the supply of resin to said injection box accordingly.

11. Method of adjusting the supply of resin to an injection box according to claim 10, wherein said step of collecting data comprises the step of using a laser light to collect data at least once every 60 seconds, preferably at least once every 10 seconds, more preferably at least once every 5 seconds.

12. Method of adjusting the supply of resin to an injection box according to claim 10 or 11, wherein said laser light is used to measure an excess amount of resin escaping from the interior of said injection box.

13. Method of adjusting the supply of resin to an injection box according to any of the claims 11-12, wherein said laser light is used to measure an excess amount of resin escaped from the interior of said injection box through at least one upper opening of said injection box.

14. Method of adjusting the supply of resin to an injection box according to any of the claims 10-13, wherein said step of adjusting the supply of resin is carried out at least once every 60 seconds, preferably at least once every 10 seconds, more preferably at least once every 5 seconds, such that the amount of resin within said injection box is kept constant within a 5% variation by weight, such as within a 3% or 2% variation by weight.

15. Use of automatic adjustment of resin level in a pultrusion apparatus according to any of the claims 1-9 to facilitate a desirable resin level throughout a pultrusion process.

## Patentansprüche

1. Strangziehvorrichtung zum Herstellen eines stranggezogenen Produkts, wobei die Strangziehvorrichtung Folgendes umfasst: einen Faservorrat (1) zum Bereitstellen von Faserbündeln (8), die mehrere Fasern umfassen, einen Harzvorrat (2a, 2b), einen Spritzkasten (4, 20), ein Strangzieh-Formwerkzeug (5), eine Zieheinrichtung (6a, 6b), die dafür eingerichtet ist, die Faserbündel (8) aus dem Faservorrat (1) und durch den Spritzkasten (4, 20) und das Strangzieh-Formwerkzeug (5) zu ziehen, und wobei die Faserbündel (8), während des Betriebs der Strangziehvorrichtung, im Spritzkasten (4, 20) mit dem Harz getränkt werden und anschließend zum Härten des Harzes durch das Strangzieh-Formwerkzeug (5) gezogen werden,
wobei die Bewegung der Faserbündel (8) durch die Strangziehvorrichtung während des Betriebs der Strangziehvorrichtung eine Produktionsrichtung definiert,
wobei die Strangziehvorrichtung eine Steuerung umfasst, die dafür eingerichtet ist, Daten zu erfassen, die die Menge an Harz innerhalb des Spritzkastens betreffen,
wobei die Strangziehvorrichtung wenigstens eine Pumpe umfasst, die dazu fähig ist, die Harzmenge einzustellen, die an den Spritzkasten zugeführt wird,
wobei die Pumpe dafür eingerichtet ist, basierend auf den Daten von der Steuerung gesteuert zu werden, wodurch die Zuführung von Harz an den Spritzkasten entsprechend eingestellt wird,
**dadurch gekennzeichnet, dass**
der Spritzkasten außerdem wenigstens eine obere Öffnung umfasst, um es zu unterstützen, dass eine überschüssige Harzmenge aus dem Inneren des Spritzkastens entweicht, und durch die das Harz im Spritzkasten von außerhalb des Spritzkastens sichtbar ist.

2. Strangziehvorrichtung nach Anspruch 1, wobei die Messvorrichtung dafür eingerichtet ist, Druckschwankungen innerhalb des Spritzkastens zu kontrollieren.

3. Strangziehvorrichtung nach einem der Ansprüche 1 bis 2, wobei die Messvorrichtung dafür eingerichtet ist, Schallwellen zu verwenden, vorzugsweise Ultraschallwellen mit einer Frequenz von über 20 kHz, um Daten zu erfassen, die die Harzmenge innerhalb des Spritzkastens betreffen.

4. Strangziehvorrichtung nach einem der Ansprüche 1 bis 3, wobei der Flächeninhalt der oberen Öffnung weniger als 30%, vorzugsweise weniger als 15% und am bevorzugtesten weniger als 5% des Flächeninhalts der Oberseite des Spritzkastens beträgt.

5. Strangziehvorrichtung nach einem der Ansprüche 1 bis 4, wobei die Steuerung eine Messvorrichtung umfasst, um die überschüssige Harzmenge in der wenigstens einen oberen Öffnung zu kontrollieren, und wobei vorzugsweise die Messvorrichtung einen Laser umfasst.

6. Strangziehvorrichtung nach einem der Ansprüche 1 bis 5, wobei wenigstens ein Teil des Spritzkastens aus einem durchsichtigen Material hergestellt ist, wobei die Lichtdurchlässigkeit des durchsichtigen Materials wenigstens 3% durch eine 10 mm Probe aus diesem durchsichtigen Material beträgt, wenn ein Lichtstrahl von 546 nm angewendet wird, wie etwa wenigstens 20% oder wenigstens 40%.

7. Strangziehvorrichtung nach Anspruch 6, wobei die Lichtdurchlässigkeit des durchsichtigen Materials wenigstens 40% und vorzugsweise wenigstens 60%, gemessen nach der ASTM D1746-35, beträgt.

8. Strangziehvorrichtung nach einem der Ansprüche 1 bis 7, wobei die Steuerung und die wenigstens eine Pumpe kommunikativ direkt verbunden sind.

9. Strangziehvorrichtung nach einem der Ansprüche 1 bis 8, wobei der Spritzkasten außerdem wenigstens eine obere Öffnung umfasst, um es zu unterstützen, dass eine überschüssige Harzmenge aus dem Inneren des Spritzkastens entweicht,
wobei der Flächeninhalt der oberen Öffnung weniger als 30%, vorzugsweise weniger als 15% und am bevorzugtesten weniger als 5% des Flächeninhalts der Oberseite des Spritzkastens beträgt,
wobei die Steuerung eine Messvorrichtung umfasst, um die überschüssige Harzmenge in der wenigstens einen oberen Öffnung zu kontrollieren, und wobei die Messvorrichtung ein Laser ist,
wobei die wenigstens eine Pumpe, basierend auf den Daten von der Steuerung, dafür eingerichtet ist so gesteuert zu werden, dass sie sicherstellt, dass die Harzmenge innerhalb des Spritzkastens innerhalb einer 5%-Schwankung nach Gewicht konstant gehalten wird, wie etwa innerhalb einer 3% oder 2%-Schwankung nach Gewicht.

10. Verfahren zum Einstellen der Zufuhr von Harz an einen Spritzkasten einer Strangziehvorrichtung nach einem der Ansprüche 1 bis 9, wobei das Verfahren die folgenden Schritte umfasst:
- Erfassen von Daten, die die Harzmenge innerhalb des Spritzkastens betreffen,
- entsprechendes Einstellen der Zufuhr von Harz an den Spritzkasten.

11. Verfahren zum Einstellen der Zufuhr von Harz an einen Spritzkasten nach Anspruch 10, wobei der Schritt zum Erfassen von Daten einen Schritt umfasst, in dem ein Laserlicht zur Erfassung von Daten wenigstens einmal alle 60 Sekunden verwendet wird, vorzugsweise wenigstens einmal alle 10 Sekunden und noch bevorzugter wenigstens einmal alle 5 Sekunden.

12. Verfahren zum Einstellen der Zufuhr von Harz an einen Spritzkasten nach Anspruch 10 oder 11, wobei das Laserlicht dazu verwendet wird eine überschüssige Harzmenge zu messen, die aus dem Inneren des Spritzkastens entweicht.

13. Verfahren zum Einstellen der Zufuhr von Harz an einen Spritzkasten nach einem der Ansprüche 11 bis 12, wobei das Laserlicht dazu verwendet wird eine überschüssige Harzmenge zu messen, die durch wenigstens eine obere Öffnung des Spritzkastens aus dem Inneren des Spritzkastens entwichen ist.

14. Verfahren zum Einstellen der Zufuhr von Harz an einen Spritzkasten nach einem der Ansprüche 10 bis 13, wobei der Schritt zum Einstellen der Harzzufuhr wenigstens einmal alle 60 Sekunden ausgeführt wird, vorzugsweise wenigstens einmal alle 10 Sekunden und noch bevorzugter wenigstens einmal alle 5 Sekunden, derart, dass die Harzmenge innerhalb des Spritzkastens innerhalb einer 5%-Schwankung nach Gewicht konstant gehalten wird, wie etwa innerhalb einer 3% oder 2%-Schwankung nach Gewicht.

15. Verwendung einer automatischen Einstellung des Harzpegels in einer Strangziehvorrichtung nach einem der Ansprüche 1 bis 9 zur Unterstützung eines gewünschten Harzpegels während eines gesamten Strangziehprozesses.

## Revendications

1. Appareil de pultrusion pour fabriquer un produit pultrudé, ledit appareil de pultrusion comprenant une alimentation de fibres (1) pour alimenter des faisceaux de fibres (8) comprenant une pluralité de fibres, une alimentation de résine (2a, 2b), une boîte d'injection (4, 20), une matrice de pultrusion (5), un mécanisme de traction (6a, 6b) étant agencé pour tirer les faisceaux de fibres (8) de l'alimentation de fibre (1) et par la boîte d'injection (4, 20) et la matrice de pultrusion (5), et où les faisceaux de fibres (8) pendant le fonctionnement dudit appareil de pultrusion, sont en cours d'imprégnation par la résine dans la boîte d'injection (4, 20) et après sont en cours de traction par la matrice de pultrusion (5) pour cuire la résine,
dans lequel le mouvement des faisceaux de fibres (8) par ledit appareil de pultrusion pendant le fonctionnement dudit appareil de pultrusion définit une direction de production,
ledit appareil de pultrusion comprend un élément de commande configuré pour collecter des données liées à la quantité de résine dans ladite boîte d'injection,
ledit appareil de pultrusion comprend au moins une pompe capable d'ajuster la quantité de résine fournie à ladite boîte d'injection,
dans lequel ladite pompe est configurée pour être commandée sur la base desdites données dudit élément de commande, ajustant par là même l'alimentation de résine à ladite boîte d'injection en conséquence,
**caractérisé en ce que**
ladite boîte d'injection comprend en outre au moins une ouverture supérieure pour faciliter l'échappement d'une quantité de résine en excès hors de l'intérieur de ladite boîte d'injection, et par laquelle la résine dans la boîte d'injection est visible depuis l'extérieur de ladite boîte d'injection.

2. Appareil de pultrusion selon la revendication 1, dans lequel ledit appareil de mesure est configuré pour surveiller des variations de pression dans ladite boîte d'injection.

3. Appareil de pultrusion selon l'une quelconque des revendications 1 à 2, dans lequel ledit appareil de mesure est configuré pour utiliser des ondes sonores, de préférence des ondes sonores ultrasoniques avec une fréquence supérieure à 20 kHz, pour collecter des données liées à la quantité de résine dans ladite boîte d'injection.

4. Appareil de pultrusion selon l'une quelconque des revendications 1 à 3, dans lequel la zone de surface de ladite ouverture supérieure est inférieure à 30 %, de préférence inférieure à 15 %, de manière davantage préférée inférieure à 5 % de la zone de surface du côté supérieur de ladite boîte d'injection.

5. Appareil de pultrusion selon l'une quelconque des revendications 1 à 4, dans lequel ledit élément de commande comprend un appareil de mesure pour surveiller ladite quantité de résine en excès dans ladite au moins une ouverture supérieure, de préférence ledit appareil de mesure comprend un laser.

6. Appareil de pultrusion selon l'une quelconque des revendications 1 à 5, dans lequel au moins une partie de ladite boîte d'injection est fabriquée en un matériau transparent, dans lequel la transmission dudit matériau transparent est d'au moins 3 % au travers d'un échantillon de 10 mm dudit matériau transparent lors de l'application d'un faisceau de lumière de 546 nm, tel qu'au moins 20 % ou au moins 40%.

7. Appareil de pultrusion selon la revendication 6, dans lequel la transmission du matériau transparent est d'au moins 40 %, de préférence d'au moins 60 % mesurée selon ASTM D1746-35.

8. Appareil de pultrusion selon l'une quelconque des revendications 1 à 7, dans lequel ledit élément de commande et ladite au moins une pompe sont directement reliés par rapport à la communication.

9. Appareil de pultrusion selon l'une quelconque des revendications 1 à 8, dans lequel ladite boîte d'injection comprend en outre au moins une ouverture supérieure pour faciliter l'échappement d'une quantité de résine en excès hors de l'intérieur de ladite boîte d'injection,
dans lequel la zone de surface de ladite ouverture supérieure est inférieure à 30 %, de préférence inférieure à 15 %, de manière davantage préférée inférieure à 5 % de la zone de surface du côté supérieur de ladite boîte d'injection,
dans lequel ledit élément de commande comprend un appareil de mesure pour surveiller ladite quantité de résine en excès dans ladite au moins une ouverture supérieure, dans lequel ledit appareil de mesure est un laser,
dans lequel ladite au moins une pompe sur la base de données dudit élément de commande est configurée pour être commandée afin d'assurer que la quantité de résine dans ladite boîte d'injection est maintenue constante dans une variation de 5 % en poids, telle que dans une variation de 3 ou 2 % en poids.

10. Procédé d'ajustement de l'alimentation de résine à une boîte d'injection d'un appareil de pultrusion selon l'une quelconque des revendications 1 à 9, dans lequel ledit procédé comprend les étapes suivantes :
- la collecte de données liées à la quantité de résine dans ladite boîte d'injection,
- l'ajustement de l'alimentation de résine à ladite boîte d'injection en conséquence.

11. Procédé d'ajustement de l'alimentation de résine à une boîte d'injection selon la revendication 10, dans lequel ladite étape de collecte de données comprend l'étape d'utilisation d'une lumière laser pour collecter des données au moins une fois toutes les 60 secondes, de préférence au moins une fois toutes les 10 secondes, de manière davantage préférée au moins une fois toutes les 5 secondes.

12. Procédé d'ajustement de l'alimentation de résine à une boîte d'injection selon la revendication 10 ou 11, dans lequel ladite lumière laser est utilisée pour mesurer une quantité de résine en excès s'échappant de l'intérieur de ladite boîte d'injection.

13. Procédé d'ajustement de l'alimentation de résine à une boîte d'injection selon l'une quelconque des revendications 11 à 12, dans lequel ladite lumière laser est utilisée pour mesurer une quantité de résine en excès échappée de l'intérieur de ladite boîte d'injection par au moins une ouverture supérieure de ladite boîte d'injection.

14. Procédé d'ajustement de l'alimentation de résine à une boîte d'injection selon l'une quelconque des revendications 10 à 13, dans lequel ladite étape d'ajustement de l'alimentation de résine est réalisée au moins une fois toutes les 60 secondes, de préférence au moins une fois toutes les 10 secondes, de manière plus préférée au moins une fois toutes les 5 secondes de sorte que la quantité de résine dans ladite boîte d'injection soit maintenue constante dans une variation de 5 % en poids, telle que dans une variation de 3 ou 2 % en poids.

15. Utilisation d'un ajustement automatique de niveau de résine dans un appareil de pultrusion selon l'une quelconque des revendications 1 à 9 pour faciliter un niveau de résine souhaitable tout au long d'un procédé de pultrusion.
